(19) Europäisches Patentamt
European Patent Office
Office européen des brevets

(11) EP 3 567 077 B1

(12) **EUROPEAN PATENT SPECIFICATION**

(45) Date of publication and mention of the grant of the patent:
**30.11.2022 Bulletin 2022/48**

(21) Application number: **18748526.3**

(22) Date of filing: **02.02.2018**

(51) International Patent Classification (IPC):
***C08L 9/06*** (2006.01) ***B60C 1/00*** (2006.01)
***C08K 3/36*** (2006.01) ***C08K 5/548*** (2006.01)
***C08L 15/00*** (2006.01)

(52) Cooperative Patent Classification (CPC):
(C-Sets available)
**C08L 9/06; B60C 1/00; C08K 3/36; C08K 5/548; C08L 15/00** (Cont.)

(86) International application number:
**PCT/JP2018/003506**

(87) International publication number:
**WO 2018/143380 (09.08.2018 Gazette 2018/32)**

(54) **TREAD RUBBER COMPOSITION, AND PNEUMATIC TIRE**

LAUFFLÄCHENKAUTSCHUKZUSAMMENSETZUNG UND LUFTREIFEN

COMPOSITION DE CAOUTCHOUC POUR BANDE DE ROULEMENT, ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2017 JP 2017018524**

(43) Date of publication of application:
**13.11.2019 Bulletin 2019/46**

(73) Proprietor: **Sumitomo Rubber Industries, Ltd.**
**Kobe-shi, Hyogo 651-0072 (JP)**

(72) Inventor: **KUNISAWA, Tetsuya**
**Kobe-shi**
**Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**JP-A- 2001 226 532**
**JP-A- 2009 126 907**
**JP-A- 2009 507 966**
**JP-A- 2010 159 392**
**JP-A- 2010 514 896**
**JP-A- 2013 249 359**
**JP-A- 2016 113 051**
**US-A1- 2008 173 379**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 567 077 B1

(52) Cooperative Patent Classification (CPC): (Cont.)

C-Sets
**C08L 9/06, C08L 15/00, C08L 9/00, C08L 91/00, C08L 25/16, C08L 91/08, C08L 45/00, C08K 3/04, C08K 3/36, C08K 5/09, C08K 3/22, C08K 3/06, C08K 5/098, C08K 5/18, C08K 5/31, C08K 5/47, C08K 5/548;**
**C08L 15/00, C08L 9/00, C08L 25/16, C08L 91/00, C08L 91/08, C08L 45/00, C08K 3/04, C08K 3/36, C08K 5/09, C08K 3/22, C08K 3/06, C08K 5/098, C08K 5/18, C08K 5/31, C08K 5/47, C08K 5/548;**
**C08L 15/00, C08L 9/06, C08L 9/00, C08L 91/00, C08L 25/16, C08L 91/08, C08L 45/00, C08K 3/04, C08K 3/36, C08K 5/09, C08K 3/22, C08K 3/06, C08K 5/098, C08K 5/18, C08K 5/31, C08K 5/47, C08K 5/548;**
**C08L 15/00, C08L 15/00, C08L 9/00, C08L 91/00, C08L 9/06, C08L 25/16, C08L 91/08, C08L 45/00, C08K 3/04, C08K 3/36, C08K 5/09, C08K 3/22, C08K 3/06, C08K 5/098, C08K 5/18, C08K 5/31, C08K 5/47, C08K 5/548;**
**C08L 15/00, C08L 15/00, C08L 9/00, C08L 91/00, C08L 25/16, C08L 91/08, C08L 45/00, C08K 3/04, C08K 3/36, C08K 5/09, C08K 3/22, C08K 3/06, C08K 5/098, C08K 5/18, C08K 5/31, C08K 5/47, C08K 5/548**

## Description

### TECHNICAL FIELD

The present invention relates to a rubber composition for treads, and a pneumatic tire.

### BACKGROUND ART

Recently, with the increasing demand for safe automobiles, it is desirable to provide tire rubber materials with improved properties such as wet grip performance. However, it is generally difficult to meet the demanding requirements these days and further to significantly improve wet grip performance while maintaining fuel economy, abrasion resistance, and other properties.

Some known methods use silica (filler for less heat build-up) to overcome these difficulties. However, silica particles tend to aggregate by hydrogen bonding of silanol groups, which are functional groups on the surface of silica, and thus will disperse insufficiently. Therefore, such methods have some problems such as failure to achieve the desired properties.

To solve this problem, silane coupling agents have been developed as materials for improving silica dispersion. For example, Patent Literature 1 proposes silane coupling agents such as bis(3-triethoxysilylpropyl)tetrasulfide. Patent Literature 2 discloses a rubber composition comprising styrene-butadiene rubber, silica, and a silane coupling agent containing a moiety having the structural formula $R\text{-}S\text{-}(CH_2)_{10}\text{-}Si(OC_2H_5)_3$. Patent Literature 3 discloses a rubber composition comprising styrene-butadiene rubber, silica, and a silane coupling agent having the formula $(CH_3O)_3Si\text{-}(CH_2)_{11}\text{-}SH$. Nevertheless, there is a need for further improvement in providing high-level wet grip performance, simultaneously with abrasion resistance and fuel economy.

### CITATION LIST

### PATENT LITERATURE

Patent Literature 1: JP 4266248 B
Patent Literature 2: US 2008/0173379 A1
Patent Literature 3: JP 2009-126907 A

### SUMMARY OF INVENTION

### TECHNICAL PROBLEM

The present invention aims to solve the problems and provide a tire rubber composition which provides significantly improved wet grip performance, and a pneumatic tire including the rubber composition.

### SOLUTION TO PROBLEM

The present invention relates to a rubber composition for treads, containing: a rubber component including a styrene butadiene rubber; a fine particle silica having an average particle size of 18 nm or less; a silane coupling agent containing an alkoxysilyl group and a sulfur atom wherein a number of carbon atoms linking the alkoxysilyl group to the sulfur atom is six or more; and a solid resin, the rubber composition satisfying $A \times B \leq 3000$ wherein A and B represent the total masses of silica and styrene, respectively, expressed in parts by mass per 100 parts by mass of the rubber component, the amount of the solid resin per 100 parts by mass of the rubber component being 3 parts by mass or more, wherein the average particle size of the fine particle silica is determined by measuring the sizes of 400 or more primary particles of the silica using a transmission or scanning electron microscope, and averaging them.

The total mass of styrene is preferably 10 to 35 parts by mass per 100 parts by mass of the rubber component.

The rubber composition preferably includes, per 100 parts by mass of the rubber component, 40 parts by mass or more of a silica having a nitrogen adsorption specific surface area of 150 $m^2/g$ or more.

The number of linking carbon atoms is preferably 8 or more .

The rubber composition preferably satisfies $1000 \leq A \times B$ wherein A and B are as defined above.

The present invention also relates to a pneumatic tire, including a tread formed from the rubber composition.

ADVANTAGEOUS EFFECTS OF INVENTION

The rubber composition for treads of the present invention contains a rubber component including a styrene butadiene rubber; a fine particle silica having an average particle size of 18 nm or less, as determined by measuring the sizes of 400 or more primary particles of the silica using a transmission or scanning electron microscope, and averaging them; a silane coupling agent containing an alkoxysilyl group and a sulfur atom wherein the number of carbon atoms linking the alkoxysilyl group to the sulfur atom is six or more; and a solid resin in an amount of 3 parts by mass or more per 100 parts by mass of the rubber component. Further, the rubber composition satisfies $A \times B \leq 3000$ wherein A and B represent the total masses of silica and styrene, respectively, expressed in parts by mass per 100 parts by mass of the rubber component. Such a rubber composition provides significantly improved wet grip performance.

DESCRIPTION OF EMBODIMENTS

The rubber composition for treads of the present invention contains: a rubber component including a styrene butadiene rubber; a fine particle silica having an average particle size of 18 nm or less, as determined by measuring the sizes of 400 or more primary particles of the silica using a transmission or scanning electron microscope, and averaging them; a silane coupling agent containing an alkoxysilyl group and a sulfur atom wherein the number of carbon atoms linking the alkoxysilyl group to the sulfur atom is six or more; and a solid resin in an amount of 3 parts by mass or more per 100 parts by mass of the rubber component. Further, the rubber composition satisfies $A \times B \leq 3000$ wherein A and B represent the total contents of silica and styrene, respectively, expressed relative to the rubber component.
The present invention significantly (synergistically) improves wet grip performance as well as the balance of wet grip performance, fuel economy, and abrasion resistance. The mechanism of this effect can be explained as follows.
It is considered that a high styrene content of SBR may inhibit the polymer from freely deforming, and that the styrene portion can easily constitute such an obstacle when silica, even having a relatively small particle size, is added in an increased amount. It is also considered that a silane coupling agent in which an alkoxysilyl group is linked to a sulfur atom by a long linker (hereinafter, also referred to as spacer) permits a certain degree of free deformation of the polymer bound to silica. Thus, it is believed that in the present invention, by using a silane coupling agent with a long spacer in an SBR compound and adjusting the product of the styrene content and the silica content to not more than a predetermined value, the degree of free deformation of the polymer can be synergistically enhanced, and therefore wet grip performance as well as the balance of wet grip performance, abrasion resistance, and fuel economy can be synergistically improved.
The rubber composition contains a rubber component including a styrene butadiene rubber (SBR). From the standpoint of the effect of the present invention, the SBR is preferably a combination of two or more SBRs having different weight average molecular weights. For example, a combination of at least two, preferably three, of SBR 1 to SBR 3 having weight average molecular weights (Mw) described below is suitable.
SBR 1 preferably has a Mw of 50000 or more, more preferably 80000 or more. The Mw is also preferably 300000 or less, more preferably 200000 or less. The use of the SBR having a Mw within the range indicated above improves the balance between wet grip performance and processability.
SBR 2 preferably has a Mw of 400000 or more, more preferably 550000 or more. The Mw is also preferably 900000 or less, more preferably 850000 or less. The use of the SBR having a Mw within the range indicated above improves the balance between wet grip performance and abrasion resistance.
SBR 3 preferably has a Mw of 1000000 or more, more preferably 1050000 or more. The Mw is also preferably 2000000 or less, more preferably 1500000 or less. The use of the SBR having a Mw within the range indicated above improves abrasion resistance.
The Mw is measured by gel permeation chromatography (GPC) calibrated with polystyrene standards.
The total SBR content based on 100% by mass of the rubber component in the rubber composition is preferably 5% by mass or more, more preferably 50% by mass or more, still more preferably 60% by mass or more. When the total content is 5% by mass or more, good abrasion resistance and good wet grip performance tend to be obtained. The total content is preferably 95% by mass or less, more preferably 90% by mass or less. When the total content is 95% by mass or less, good low heat build-up properties tend to be obtained.
The SBR may be either an unmodified SBR or modified SBR. Particularly in view of wet grip performance as well as fuel economy and abrasion resistance, the SBR is preferably a modified SBR.
The modified SBR may be any SBR having a functional group interactive with filler such as silica. For example, it may be a chain end-modified SBR obtained by modifying at least one chain end of SBR with a compound (modifier) having the functional group (i.e., a chain end-modified SBR terminated with the functional group) ; a backbone-modified SBR having the functional group in the backbone; a backbone- and chain end-modified SBR having the functional group in both the backbone and chain end (e.g., a backbone- and chain end-modified SBR in which the backbone has the functional group, and at least one chain end is modified with the modifier); or a chain end-modified SBR that has been

modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Among these, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred in order to more suitably achieve the effect of the present invention.

Specifically, the modified SBR may suitably be, for example, an SBR modified with a compound (modifier) represented by the following formula (1) (referred to as S-modified SBR) :

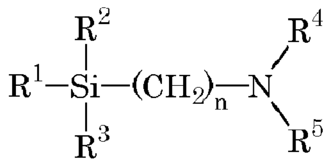

(1)

wherein $R^1$, $R^2$, and $R^3$ are the same or different and each represent an alkyl, alkoxy, silyloxy, acetal, carboxyl (-COOH), or mercapto (-SH) group, or a derivative thereof; $R^4$ and $R^5$ are the same or different and each represent a hydrogen atom or an alkyl group, and $R^4$ and $R^5$ may be joined together to form a ring structure with the nitrogen atom; and n represents an integer.

The S-modified SBR may suitably be a styrene butadiene rubber obtained by modifying the polymerizing end (active terminal) of a solution-polymerized styrene butadiene rubber (S-SBR) with the compound of formula (1) (referred to as S-modified S-SBR (modified SBR disclosed in JP 2010-111753 A)), among others.

$R^1$, $R^2$, and $R^3$ may each suitably be an alkoxy group, preferably a C1-C8, more preferably C1-C4, alkoxy group. $R^4$ and $R^5$ may each suitably be an alkyl group, preferably a C1-C3 alkyl group. The integer n is preferably 1 to 5, more preferably 2 to 4, still more preferably 3. When $R^4$ and $R^5$ are joined together to form a ring structure with the nitrogen atom, the ring structure is preferably a 4- to 8-membered ring. The term "alkoxy group" encompasses cycloalkoxy (e.g. cyclohexyloxy) and aryloxy (e.g. phenoxy, benzyloxy) groups.

Specific examples of the compound of formula (1) include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. To improve the above-mentioned properties well, 3-dimethylaminopropyltrimethoxysilane, 3-dimethylaminopropyltriethoxysilane, and 3-diethylaminopropyltrimethoxysilane are preferred among these. These may be used alone, or two or more of these may be used in combination.

Moreover, specifically, the modified SBR may also suitably be an SBR modified with any of the modifiers listed below. Examples of modifiers include: polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl] sulfide;

N-substituted aziridine compounds such as ethylene imine and propylene imine; alkoxysilanes such as methyltriethoxysilane; (thio)benzophenone compounds containing an amino group and/or a substituted amino group such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing an amino group and/or a substituted amino group such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-ω-laurilolactam, N-methyl-β-propiolactam, and N-phenyl-β-propiolactam; and

N,N-bis(2,3-epoxypropoxy)aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone.

The modification with any of the compounds may be performed by known methods.

The SBR may be, for example, a solution-polymerized SBR manufactured or sold by, for example, Sumitomo Chemical Co., Ltd., JSR Corporation, Asahi Kasei Corporation, or Zeon Corporation.

In the present invention, the rubber component may include additional rubbers in addition to the SBR. Examples of such additional rubbers include natural rubber (NR), epoxidized natural rubber (ENR), polyisoprene rubber (IR), polybutadiene rubber (BR), chloroprene rubber (CR), acrylonitrile butadiene rubber (NBR), and butyl rubber (IIR). These rubbers may be used alone, or two or more of these may be used in combination. BR is preferred among these.

The BR content based on 100% by mass of the rubber component in the rubber composition is preferably 5% by mass or more, more preferably 10% by mass or more. When the content is 5% by mass or more, good abrasion resistance tends to be obtained. The content is preferably 50% by mass or less, more preferably 30% by mass or less. When the content is 50% by mass or less, good wet grip performance tends to be obtained.

Non-limiting examples of the BR include high-cis content BR such as BR1220 available from Zeon Corporation and BR130B and BR150B both available from Ube Industries, Ltd.; and BR containing syndiotactic polybutadiene crystals such as VCR412 and VCR617 both available from Ube Industries, Ltd. These may be used alone or in combinations of two or more. In particular, the BR preferably has a cis content of 95% by mass or higher to improve abrasion resistance.

Moreover, the BR may be an unmodified BR or modified BR. Examples of the modified BR include those into which functional groups as listed for the modified SBR have been introduced.

The BR may be a commercial product of, for example, Ube Industries, Ltd., JSR Corporation, Asahi Kasei Corporation, or Zeon Corporation.

The rubber composition contains a fine particle silica having an average particle size of 18 nm or less. The fine particle silica provides good properties such as wet grip performance. The rubber composition preferably contains a fine particle silica of 17.5 nm or less, more preferably 17 nm or less particle size. Moreover, the lower limit of the average particle size is not particularly limited, but is preferably 8 nm or more, more preferably 9 nm or more, in view of silica dispersion.

The average particle size of the fine particle silica can be determined by measuring the sizes of 400 or more primary particles of the silica in the field of view of a transmission or scanning electron microscope, and averaging them.

The amount of the fine particle silica per 100 parts by mass of the rubber component in the rubber composition is preferably 40 parts by mass or more, more preferably 45 parts by mass or more. The amount is preferably 100 parts by mass or less, more preferably 80 parts by mass or less. With 40 parts by mass or more of the fine particle silica, good properties such as wet grip performance tend to be obtained. With 100 parts by mass or less of the fine particle silica, good silica dispersion and processability tend to be obtained.

The rubber composition preferably contains a silica having a nitrogen adsorption specific surface area ($N_2SA$) of 150 $m^2/g$ or more. The $N_2SA$ of the silica is more preferably 160 $m^2/g$ or more, but preferably 300 $m^2/g$ or less, more preferably 200 $m^2/g$ or less. When the $N_2SA$ is 150 $m^2/g$ or more, good wet grip performance tends to be obtained. When the $N_2SA$ is 300 $m^2/g$ or less, good silica dispersion and fuel economy tend to be obtained. The $N_2SA$ of the silica can be measured in accordance with ASTM D3037-81.

The amount of the silica having a $N_2SA$ of 150 $m^2/g$ or more in the rubber composition is suitably within the same range as described for the amount of the fine particle silica. In the case where the fine particle silica is also characterized by having a $N_2SA$ of 150 $m^2/g$ or more, the amount of the silica having a $N_2SA$ of 150 $m^2/g$ or more includes the amount of the fine particle silica.

The silica may be a commercial product of, for example, Degussa, Rhodia, Tosoh Silica Corporation, Solvay Japan, or Tokuyama Corporation.

The rubber composition contains a silane coupling agent containing an alkoxysilyl group and a sulfur atom wherein the number of carbon atoms linking the alkoxysilyl group to the sulfur atom is six or more. The number of linking

carbon atoms is preferably 8 or more to significantly improve wet grip performance and to significantly improve the balance of wet grip performance, fuel economy, and abrasion resistance, which are difficult to achieve simultaneously.

The amount of the silane coupling agent per 100 parts by mass of total silica in the rubber composition is preferably 0.5 parts by mass or more, more preferably 4 parts by mass or more, still more preferably 6 parts by mass or more. When the amount is 0.5 parts by mass or more, chemical bonding between rubber and silica via the silane coupling agent can be sufficiently produced, so that good silica dispersion can be obtained, resulting in improved wet grip performance, fuel economy, and abrasion resistance. The amount of the silane coupling agent is preferably 20 parts by mass or less, more preferably 15 parts by mass or less, still more preferably 13 parts by mass or less. When the amount is 20 parts by mass or less, good processability can be ensured.

The silane coupling agent may be, for example, an organosilicon compound having a ratio of the number of sulfur atoms to the number of silicon atoms of 1.0 to 1.5 as represented by the following average compositional formula (I):

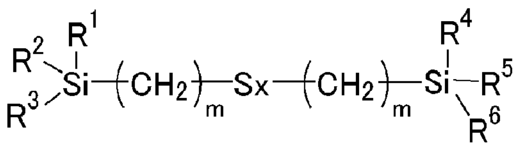

(I)

wherein x represents the average number of sulfur atoms; m represents an integer of 6 to 12; and $R^1$ to $R^6$ are the same or different and each represent a C1-C6 alkyl or alkoxy group, at least one of $R^1$ to $R^3$ and at least one of $R^4$ to $R^6$ are the alkoxy groups, provided that the alkyl or alkoxy groups for $R^1$ to $R^6$ may be joined to form a ring structure.

When the organosilicon compound of formula (I) is used as a silane coupling agent in a silica-containing rubber composition, the rubber composition provides significantly improved wet grip performance and further achieves a balanced improvement of processability, which is a shortcoming of silica-containing formulations, and fuel economy and abrasion resistance, which are a trade-off with wet grip performance.

The reason for this effect is not absolutely clear but seems to be as follows.

Organosilicon compounds (silane coupling agents) crosslink silica to rubber. Particularly when the compound of formula (I) having 8 carbon atoms between sulfur and silicon atoms is used as a silane coupling agent, the length of the bond between silica and rubber will be longer than that obtained when usual silane coupling agents are used. Thus, it is believed that a certain degree of flexibility is imparted to the crosslinked portion, thereby resulting in improved wet grip performance. It is also believed that relaxation of external stress which can cause rubber fracture is facilitated, thereby resulting in improved abrasion resistance as well. Therefore, wet grip performance and abrasion resistance can be simultaneously achieved while maintaining good fuel economy, so that a balanced improvement of these properties can be achieved.

The symbol x represents the average number of sulfur atoms in the organosilicon compound. This means that the organosilicon compound of average compositional formula (I) is a mixture of compounds having different sulfur numbers, and x is the average number of sulfur atoms of the organosilicon compounds contained in the rubber composition. The symbol x is defined as {2 × (number of sulfur atoms)}/(number of silicon atoms) . In view of the balance of wet grip performance, fuel economy, and abrasion resistance, x is preferably 2.0 to 2.4, more preferably 2.0 to 2.3. In particular, when x is less than the upper limit, an increase in the Mooney viscosity of the unvulcanized rubber can be reduced, resulting in good processability. The number of sulfur atoms and the number of silicon atoms are determined by measuring the amount of sulfur or silicon in the composition by X-ray fluorescence analysis, followed by calculation based on their molecular weight.

The symbol m represents an integer of 6 to 12, preferably 6 to 10, more preferably 8. In this case, the above-described effect can be achieved, and the effect of the present invention can be sufficiently achieved.

In view of the balance of the above-mentioned properties, the alkyl group ($R^1$ to $R^6$) preferably has 1 to 6 carbon atoms, more preferably 1 to 4 carbon atoms. The alkyl group may be linear, branched, or cyclic. Specific examples include methyl, ethyl, n-propyl, isopropyl, n-butyl, iso-butyl, sec-butyl, and tert-butyl groups.

In view of the balance of the above-mentioned properties, the alkoxy group ($R^1$ to $R^6$) preferably has 1 to 6 carbon atoms, more preferably 1 to 4 carbon atoms. The hydrocarbon group in the alkoxy group may be linear, branched, or cyclic. Specific examples include methoxy, ethoxy, n-propoxy, isopropoxy, and n-butoxy groups.

At least one of $R^1$ to $R^3$ and at least one of $R^4$ to $R^6$ are C1-C6 alkoxy groups. Preferably two or more of $R^1$ to $R^3$ and two or more of $R^4$ to $R^6$ are alkoxy groups.

The C1-C6 alkyl or alkoxy groups for $R^1$ to $R^6$ may be joined to form a ring structure. For example, (i) when an ethoxy group as $R^1$ is joined to a methyl group as $R^2$ to form a ring structure, and (ii) when an ethyl group as $R^1$ is joined to a methyl group as $R^2$ to form a ring structure, $R^1$ and $R^2$ form the divalent groups : $-O-C_2H_4-CH_2-$ and $-C_2H_4-CH_2-$, respectively, which are bound to Si.

The organosilicon compound has a ratio of the number of sulfur atoms to the number of silicon atoms of 1.0 to

1.5. In other words, the ratio of the total number of sulfur atoms to the total number of silicon atoms of the organosilicon compounds of average compositional formula (I) contained in the rubber composition falls within the range indicated above.

In view of the balance of wet grip performance, fuel economy, and abrasion resistance, the ratio of the number of sulfur atoms to the number of silicon atoms is preferably 1.0 to 1.2, more preferably 1.0 to 1.15.

The organosilicon compound of average compositional formula (I) having a ratio of the number of sulfur atoms to the number of silicon atoms within the predetermined range may be prepared, for example, as follows.

The organosilicon compound can be produced by reacting a halogen-containing organosilicon compound represented by the following formula (I-1):

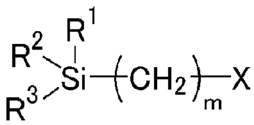

(I-1)

wherein $R^1$ to $R^3$ and m are as defined above, and X represents a halogen atom, with anhydrous sodium sulfide represented by $Na_2S$ and optionally sulfur.

Examples of X (halogen atom) include Cl, Br, and I.

Examples of the silane coupling agent such as the sulfide chain-containing organosilicon compound of average compositional formula (I) include the following compounds:

$(CH_3O)_3Si\text{-}(CH_2)_6\text{-}S_1\text{-}(CH_2)_6\text{-}Si(OCH_3)_3$

$(CH_3O)_3Si\text{-}(CH_2)_6\text{-}S_2\text{-}(CH_2)_6\text{-}Si(OCH_3)_3$

$(CH_3O)_3Si\text{-}(CH_2)_6\text{-}S_3\text{-}(CH_2)_6\text{-}Si(OCH_3)_3$

$(CH_3CH_2O)_3Si\text{-}(CH_2)_6\text{-}S_1\text{-}(CH_2)_6\text{-}Si(OCH_2CH_3)_3$

$(CH_3CH_2O)_3Si\text{-}(CH_2)_6\text{-}S_2\text{-}(CH_2)_6\text{-}Si(OCH_2CH_3)_3$

$(CH_3CH_2O)_3Si\text{-}(CH_2)_6\text{-}S_3\text{-}(CH_2)_6\text{-}Si(OCH_2CH_3)_3$

$(CH_3CH_2O)_2(CH_3)Si\text{-}(CH_2)_6\text{-}S_2\text{-}(CH_2)_6\text{-}Si(CH_3)(OCH_2CH_3)_2$

$CH_3CH_2O(CH_3)_2Si\text{-}(CH_2)_6\text{-}S_2\text{-}(CH_2)_6\text{-}Si(CH_3)_2OCH_2CH_3$

$(CH_3O)_3Si\text{-}(CH_2)_8\text{-}S_1\text{-}(CH_2)_8\text{-}Si(OCH_3)_3$

$(CH_3O)_3Si\text{-}(CH_2)_8\text{-}S_2\text{-}(CH_2)_8\text{-}Si(OCH_3)_3$

$(CH_3O)_3Si\text{-}(CH_2)_8\text{-}S_3\text{-}(CH_2)_8\text{-}Si(OCH_3)_3$

$(CH_3CH_2O)_3Si\text{-}(CH_2)_8\text{-}S_1\text{-}(CH_2)_8\text{-}Si(OCH_2CH_3)_3$

$(CH_3CH_2O)_3Si\text{-}(CH_2)_8\text{-}S_2\text{-}(CH_2)_8\text{-}Si(OCH_2CH_3)_3$

$(CH_3CH_2O)_3Si\text{-}(CH_2)_8\text{-}S_3\text{-}(CH_2)_8\text{-}Si(OCH_2CH_3)_3$

$(CH_3CH_2O)_2(CH_3)Si\text{-}(CH_2)_8\text{-}S_2\text{-}(CH_2)_8\text{-}Si(CH_3)(OCH_2CH_3)_2$

$CH_3CH_2O(CH_3)_2Si\text{-}(CH_2)_8\text{-}S_2\text{-}(CH_2)_8\text{-}Si(CH_3)_2OCH_2CH_3$

$(CH_3O)_3Si\text{-}(CH_2)_{11}\text{-}Si\text{-}(CH_2)_{11}\text{-}Si(OCH_3)_3$

$(CH_3O)_3Si\text{-}(CH_2)_{11}\text{-}S_2\text{-}(CH_2)_{11}\text{-}Si(OCH_3)_3$

$(CH_3O)_3Si\text{-}(CH_2)_{11}\text{-}S_3(CH_2)_{11}\text{-}Si(OCH_3)_3$

$(CH_3CH_2O)_3Si-(CH_2)_{11}-S_1-(CH_2)_{11}-Si(OCH_2CH_3)_3$

$(CH_3CH_2O)_3Si-(CH_2)_{11}-S_2-(CH_2)_{11}-Si(OCH_2CH_3)_3$

$(CH_3CH_2O)_3Si-(CH_2)_{11}-S_3-(CH_2)_{11}-Si(OCH_2CH_3)_3$

$(CH_3CH_2O)_2(CH_3)Si-(CH_2)_{11}-S_2-(CH_2)_{11}-Si(CH_3)(OCH_2CH_3)_2$

$CH_3CH_2O(CH_3)_2Si-(CH_2)_{11}-S_2-(CH_2)_{11}-Si(CH_3)_2OCH_2CH_3$

Examples of the halogen-containing organosilicon compound of formula (I-1) include the following compounds:

$(CH_3O)_3Si-(CH_2)_6-Cl$

$(CH_3O)_3Si-(CH_2)_6-Br$

$(CH_3CH_2O)_3Si-(CH_2)_6-Cl$

$(CH_3CH_2O)_3Si-(CH_2)_6-Br$

$(CH_3CH_2O)_2(CH_3)Si-(CH_2)_6-Cl$

$CH_3CH_2O(CH_3)_2Si-(CH_2)_6-Cl$

$(CH_3O)_3Si-(CH_2)_8-Cl$

$(CH_3O)_3Si-(CH_2)_8-Br$

$(CH_3CH_2O)_3Si-(CH_2)_8-Cl$

$(CH_3CH_2O)_3Si-(CH_2)_8-Br$

$(CH_3CH_2O)_2(CH_3)Si-(CH_2)_8-Cl$

$CH_3CH_2O(CH_3)_2Si-(CH_2)_8-Cl$

$(CH_3O)_3Si-(CH_2)_{11}-Cl$

$(CH_3O)_3Si-(CH_2)_{11}-Br$

$(CH_3CH_2O)_3Si-(CH_2)_{11}-Cl$

$(CH_3CH_2O)_3Si-(CH_2)_{11}-Br$

$(CH_3CH_2O)_2(CH_3)Si-(CH_2)_{11}-Cl$

$CH_3CH_2O(CH_3)_2Si-(CH_2)_{11}-Cl$

In the reaction, sulfur may optionally be added to control the sulfide chain. The addition amount may be selected depending on the amounts of the compound of formula (1-1) and anhydrous sodium sulfide in order to give the desired compound of average compositional formula (I).

For example, when it is desired to produce a compound of average compositional formula (I) wherein x is 2.2, it is sufficient to react 1.0 mol of anhydrous sodium sulfide, 1.2 mol of sulfur, and 2.0 mol of the compound of formula (I-1).

The reaction may be carried out in a solvent or under solvent-free conditions. Examples of usable solvents include aliphatic hydrocarbons such as pentane and hexane; aromatic hydrocarbons such as benzene, toluene, and xylene; ethers such as tetrahydrofuran, diethyl ether, and dibutyl ether; and alcohols such as methanol and ethanol. The reaction is preferably carried out in an ether such as tetrahydrofuran or an alcohol such as methanol or ethanol, among

others.

The temperature during the reaction is not particularly limited and may be from room temperature to about 200°C, in particular preferably 60 to 170°C, more preferably 60 to 100°C. The duration of the reaction is 30 minutes or longer, and the reaction will be completed in about 2 to 15 hours.

In the present invention, the solvent, if used, may be evaporated under reduced pressure before or after the salts formed are removed by filtration after completion of the reaction.

The silane coupling agent may be a commercial product of, for example, Degussa, Momentive, Shin-Etsu Silicone, Tokyo Chemical Industry Co., Ltd., AZmax. Co., or Dow Corning Toray Co., Ltd.

In view of abrasion resistance, wet grip performance, and other properties, the rubber composition preferably contains carbon black. Examples of the carbon black include carbon black of grades N110, N220, N330, and N550.

The carbon black may be a commercial product of, for example, Asahi Carbon Co., Ltd., Cabot Japan K.K., Tokai Carbon Co., Ltd., Mitsubishi Chemical Corporation, Lion Corporation, NSCC Carbon Co., Ltd., or Columbia Carbon.

The carbon black preferably has a nitrogen adsorption specific surface area ($N_2SA$) of 30 $m^2/g$ or more, more preferably 40 $m^2/g$ or more. The $N_2SA$ is preferably 250 $m^2/g$ or less, more preferably 235 $m^2/g$ or less. When the $N_2SA$ is not less than the lower limit, good abrasion resistance tends to be obtained. When the $N_2SA$ is not more than the upper limit, good dispersion of carbon black tends to be achieved, resulting in excellent fuel economy.

The $N_2SA$ of the carbon black can be determined in accordance with JIS K 6217-2:2001.

The amount of the carbon black per 100 parts by mass of the rubber component in the rubber composition is preferably 1 part by mass or more, more preferably 3 parts by mass or more. The amount is also preferably 15 parts by mass or less, more preferably 10 parts by mass or less, still more preferably 8 parts by mass or less. When the amount is 1 part by mass or more, good abrasion resistance tends to be obtained. When the amount is 15 parts by mass or less, good fuel economy tends to be obtained.

The rubber composition contains a solid resin (a resin that is solid at room temperature (25°C)). Examples of the solid resin include aromatic vinyl polymers such as α-methylstyrene resins produced by polymerizing α-methylstyrene and/or styrene. The solid resin preferably has a softening point of 60 to 120°C. The softening point of the solid resin is determined in accordance with JIS K 6220-1:2001 using a ring and ball softening point measuring apparatus and defined as the temperature at which the ball drops down.

Preferred examples of the α-methylstyrene resins include homopolymers of α-methylstyrene or styrene and copolymers of α-methylstyrene and styrene, which provide excellent properties such as wet grip performance. More preferred are copolymers of α-methylstyrene and styrene.

The amount of the solid resin per 100 parts by mass of the rubber component in the rubber composition is 3 parts by mass or more, preferably 3 to 30 parts by mass, more preferably 5 to 20 parts by mass. Incorporation of such a predetermined amount of the solid resin tends to enhance wet grip performance, abrasion resistance, and other properties.

The solid resin may be a commercial product of, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., or Taoka Chemical Co., Ltd.

The rubber composition preferably contains an oil.

Examples of the oil include process oils, vegetable fats and oils, and mixtures thereof. Examples of the process oils include paraffinic process oils, aromatic process oils, and naphthenic process oils. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone, or two or more of these may be used in combination. To better achieve the effect of the present invention, naphthenic process oils are preferred among these.

The oil may be a commercial product of, for example, Idemitsu Kosan Co., Ltd., Sankyo Yuka Kogyo K.K., Japan Energy Corporation, Olisoy, H&R, Hokoku Corporation, Showa Shell Sekiyu K.K., or Fuji Kosan Co., Ltd.

The amount of the oil per 100 parts by mass of the rubber component in the rubber composition is preferably 1 part by mass or more, more preferably 3 parts by mass or more. The amount is also preferably 50 parts by mass or less, more preferably 30 parts by mass or less. When the amount is within the numerical range indicated above, the effect of the present invention tends to be better achieved.

The amount of the oil includes the oil contained in the rubber (oil extended rubber).

The rubber composition preferably contains a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other monomers. These may be used alone, or two or more of these may be used in combination. To better achieve the effect of the present invention, petroleum waxes are preferred among these, with paraffin waxes being more preferred.

The wax may be a commercial product of, for example, Ouchi Shinko Chemical Industrial Co., Ltd., Nippon Seiro Co., Ltd., or Seiko Chemical Co., Ltd.

The amount of the wax per 100 parts by mass of the rubber component in the rubber composition is preferably 1.0 part by mass or more, more preferably 1.5 parts by mass or more. The amount is also preferably 10 parts by mass or less, more preferably 7 parts by mass or less. When the amount is within the numerical range indicated above, the effect of the present invention tends to be well achieved.

The rubber composition preferably contains an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)-propionate]methane. These may be used alone, or two or more of these may be used in combination. Among these, p-phenylenediamine and/or quinoline antioxidants are preferred, with N-(1,3-dimethylbutyl)-N'-phenyl-p-phenylenediamine and/or 2,2,4-trimethyl-1,2-dihydroquinoline polymer being more preferred.

The antioxidant may be a commercial product of, for example, Seiko Chemical Co., Ltd., Sumitomo Chemical Co., Ltd., Ouchi Shinko Chemical Industrial Co., Ltd., or Flexsys.

The amount of the antioxidant per 100 parts by mass of the rubber component in the rubber composition is preferably 1 part by mass or more, more preferably 3 parts by mass or more. The amount is also preferably 10 parts by mass or less, more preferably 7 parts by mass or less. When the amount is within the numerical range indicated above, the effect of the present invention tends to be well achieved.

The rubber composition preferably contains stearic acid.

The stearic acid may be a conventional one, for example, a commercial product of NOF Corporation, NOF Corporation, Kao Corporation, Wako Pure Chemical Industries, Ltd., or Chiba Fatty Acid Co., Ltd.

The amount of the stearic acid per 100 parts by mass of the rubber component in the rubber composition is preferably 0.5 parts by mass or more, more preferably 1 part by mass or more. The amount is also preferably 10 parts by mass or less, more preferably 5 parts by mass or less. When the amount is within the numerical range indicated above, the effect of the present invention tends to be well achieved.

The rubber composition preferably contains zinc oxide.

The zinc oxide may be a conventional one, for example, a commercial product of Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of the zinc oxide per 100 parts by mass of the rubber component in the rubber composition is preferably 0.5 parts by mass or more, more preferably 1 part by mass or more. The amount is also preferably 10 parts by mass or less, more preferably 5 parts by mass or less. When the amount is within the numerical range indicated above, the effect of the present invention tends to be better achieved.

The rubber composition preferably contains sulfur.

Examples of the sulfur include those usually used in the rubber industry, such as powdered sulfur, precipitated sulfur, colloidal sulfur, insoluble sulfur, highly dispersible sulfur, and soluble sulfur. These may be used alone, or two or more of these may be used in combination.

The sulfur may be a commercial product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The amount of the sulfur per 100 parts by mass of the rubber component in the rubber composition is preferably 0.5 parts by mass or more, more preferably 0.8 parts by mass or more. The amount is also preferably 10 parts by mass or less, more preferably 5 parts by mass or less, still more preferably 3 parts by mass or less. When the amount is within the numerical range indicated above, the effect of the present invention tends to be well achieved.

The rubber composition preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone, or two or more of these may be used in combination. To more suitably achieve the effect of the present invention, sulfenamide and/or guanidine vulcanization accelerators are preferred among these.

The amount of the vulcanization accelerator per 100 parts by mass of the rubber component in the present invention is preferably 1 part by mass or more, more preferably 3 parts by mass or more. The amount is also preferably

10 parts by mass or less, more preferably 7 parts by mass or less. When the amount is within the numerical range indicated above, the effect of the present invention tends to be well achieved.

In addition to the above-mentioned components, the rubber composition may contain additives usually used in the tire industry. Examples include organic peroxides; fillers such as calcium carbonate, talc, alumina, cray, aluminum hydroxide, and mica; and processing aids such as plasticizers and lubricants.

The total mass of styrene (the total amount of styrene contained in the total rubber component) per 100 parts by mass of the rubber component in the rubber composition is preferably 10 parts by mass or more, more preferably 20 parts by mass or more. When the total mass of styrene is 10 parts by mass or more, good wet grip performance tends to be obtained. The total mass of styrene is preferably 35 parts by mass or less, more preferably 30 parts by mass or less. When the total mass of styrene is 35 parts by mass or less, the balance between wet grip performance and abrasion resistance tends to be enhanced.

The rubber composition satisfies $A \times B \leq 3000$ wherein A and B represent the total masses of silica (the total amount of silica in parts by mass per 100 parts by mass of the rubber component) and styrene (the total amount of styrene in parts by mass per 100 parts by mass of the rubber component), respectively, expressed in parts by mass per 100 parts by mass of the rubber component in the tread. This enhances properties such as wet grip performance and significantly improves the balance of the properties. The rubber composition preferably satisfies $A \times B \leq 2800$, more preferably $A \times B \leq 2500$. The lower limit is not particularly limited. To obtain good wet grip performance, the rubber composition preferably satisfies $1000 \leq A \times B$, more preferably $1500 \leq A \times B$.

The total masses of silica and styrene can be measured as described later in EXAMPLES.

The rubber composition for treads of the present invention may be prepared, for example, by kneading the components in a rubber kneading machine such as an open roll mill or Banbury mixer, and vulcanizing the kneaded mixture.

The pneumatic tire of the present invention can be produced using the rubber composition for treads by usual methods. Specifically, the rubber composition incorporating the components, before vulcanization, may be extruded and processed into the shape of a tread and then assembled with other tire components on a tire building machine in a usual manner to build an unvulcanized tire, which may then be heated and pressurized in a vulcanizer to obtain a tire.

The pneumatic tire of the present invention is suitable for use as a tire for passenger vehicles, large passenger vehicles, large SUVs, heavy load vehicles such as trucks and buses, or light trucks.

EXAMPLES

The chemicals used in examples and comparative examples are listed below.

SBR 1: modified solution-polymerized SBR synthesized in Production Example 1 below (styrene content: 25% by mass, vinyl content: 60% by mass, Mw: 150,000)
SBR 2: modified solution-polymerized SBR synthesized in Production Example 2 below (styrene content: 35% by mass, vinyl content: 50% by mass, Mw: 700,000)
SBR 3: unmodified solution-polymerized SBR (styrene content: 40% by mass, vinyl content: 25% by mass, Mw: 1, 200, 000)
BR: cis content: 97% by mass, vinyl content: 1% by mass
Carbon black 1: $N_2SA$: 111 $m^2/g$
Carbon black 2: $N_2SA$: 195 $m^2/g$
Silica 1: $N_2SA$: 175 $m^2/g$, average particle size: 16.7 nm
Silica 2: $N_2SA$: 215 $m^2/g$, average particle size: 15.5 nm
Silica 3: $N_2SA$: 105 $m^2/g$, average particle size: 19.5 nm
Aluminum hydroxide: HIGILITE H-43 (average primary particle size: 1 $\mu$m) available from Showa Denko K.K.
Silane coupling agent 1: 3-octanoylthiopropyl-triethoxysilane
Silane coupling agent 2: silane coupling agent synthesized in Production Example 3 below
Silane coupling agent 3: silane coupling agent synthesized in Production Example 4 below
Silane coupling agent 4: silane coupling agent synthesized in Production Example 5 below
Silane coupling agent 5: silane coupling agent synthesized in Production Example 6 below
Oil: naphthenic process oil
Resin: $\alpha$-methylstyrene resin (a copolymer of $\alpha$-methylstyrene and styrene, softening point: 85°C, Tg: 43°C)
Processing aid 1: zinc salt of saturated fatty acid
Processing aid 2: potassium tetraborate
Wax: paraffinic wax
Antioxidant 1: N-(1,3-dimethylbutyl)-N'-phenyl-p-phenylenediamine
Antioxidant 2: poly(2,2,4-trimethyl-1,2-dihydroquinoline)

Stearic acid: stearic acid "TSUBAKI " available from NOF Corporation
Zinc oxide: Zinc oxide #1 available from Mitsui Mining & Smelting Co., Ltd.
Sulfur: powdered sulfur available from Tsurumi Chemical Industry Co., Ltd.
Vulcanization accelerator 1: N-tert-butyl-2-benzothiazolylsulfenamide
Vulcanization accelerator 2: diphenylguanidine

(Production Example 1: Synthesis of SBR 1)

A nitrogen-purged autoclave reactor having an inner volume of 5L was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under adiabatic conditions, and the maximum temperature reached 85°C. Once the polymerization conversion ratio reached 99%, butadiene was added, followed by polymerization for five minutes. Subsequently, 3-dimethylaminopropyltrimethoxysilane was added as a modifier to perform a reaction. After completion of the polymerization, 2,6-di-tert-butyl-p-cresol was added. Then, the solvent was removed by steam stripping. The resulting product was dried on hot rolls adjusted at 110°C to obtain modified styrene butadiene rubber (SBR 1).

(Production Example 2: Synthesis of SBR 2)

A reactor equipped with a stirrer and a jacket was charged with cyclohexane, 1,3-butadiene, tetrahydrofuran, and styrene in a nitrogen atmosphere. The temperature of the mixture was adjusted to 30°C, and then n-butyllithium was added to initiate polymerization. After heating to 70°C, polymerization was performed for two hours. Once the polymerization conversion ratio reached 100%, a small amount of tin tetrachloride was added, and a coupling reaction was performed at 70°C. Then, 3-diethylaminopropyltrimethoxysilane was added, and a modification reaction was performed at 60°C. To the resulting copolymer solution was added 2,6-di-tert-butyl-p-cresol. Then, the solvent was removed by steam stripping, followed by drying on hot rolls at 110°C to obtain modified SBR (SBR 2) .

(Production Example 3: Synthesis of silane coupling agent 2 (x = 2.2, m = 8, $R^1$ to $R^6$ = $OCH_2CH_3$))

A 2 L separable flask equipped with a stirrer, a reflux condenser, a dropping funnel, and a thermometer was charged with 78.0 g (1.0 mol) of anhydrous sodium sulfide, 38.5 g (1.2 mol) of sulfur, and 480 g of ethanol, followed by heating to 80°C. To the mixture was dropwise added 622 g (2.0 mol) of 8-chlorooctyltriethoxysilane, followed by heating with stirring at 80°C for 10 hours. The reaction solution was filtered under pressure through a filter plate to obtain a filtrate from which the salts formed through the reaction were removed. The filtrate was heated to 100°C, and the ethanol was evaporated under a reduced pressure of 10 mmHg or lower to obtain silane coupling agent 2 as a reaction product.

The silane coupling agent 2 compound had a sulfur content of 10.8% by mass (0.34 mol), a silicon content of 8.7% by mass (0.31 mol), and a ratio of the number of sulfur atoms to the number of silicon atoms of 1.1.

(Production Example 4: Synthesis of silane coupling agent 3 (x = 2.0, m = 8, $R^1$ to $R^6$ = $OCH_2CH_3$))

Silane coupling agent 3 was prepared as a reaction product by the same synthesis procedure as in Production Example 3, except that the amount of sulfur was changed to 32.1 g (1.0 mol) .

The silane coupling agent 3 compound had a sulfur content of 10.0% by mass (0.31 mol), a silicon content of 8.8% by mass (0.31 mol), and a ratio of the number of sulfur atoms to the number of silicon atoms of 1.0.

(Production Example 5: Synthesis of silane coupling agent 4 (x = 2.4, m = 8, $R^1$ to $R^6$ = $OCH_2CH_3$))

Silane coupling agent 4 was prepared as a reaction product by the same synthesis procedure as in Production Example 1, except that the amount of sulfur was changed to 45.0 g (1.4 mol) .

The silane coupling agent 4 compound had a sulfur content of 11.9% by mass (0.37 mol), a silicon content of 8.7% by mass (0.31 mol), and a ratio of the number of sulfur atoms to the number of silicon atoms of 1.2.

(Production Example 6: Synthesis of silane coupling agent 5 (x = 2.2, m = 8, $R^1$, $R^2$, $R^4$, $R^5$ = $OCH_2CH_3$, $R^3$, $R^6$ = $CH_3$))

Silane coupling agent 5 was prepared as a reaction product by the same synthesis procedure as in Production Example 1, except that 562 g (2.0 mol) of 8-chlorooctyldiethoxymethylsilane was used instead of 8-chlorooctyltriethoxysilane.

The silane coupling agent 5 compound had a sulfur content of 11.0% by mass (0.34 mol), a silicon content of

8.7% by mass (0.31 mol), and a ratio of the number of sulfur atoms to the number of silicon atoms of 1.1.

<Examples and Comparative Examples>

According to each formulation shown in Table 1 or 2, the chemicals other than the sulfur and vulcanization accelerators were kneaded in a Banbury mixer at 150°C for 5 minutes. To the kneaded mixture were added the sulfur and vulcanization accelerators, and they were kneaded using an open roll mill at 170°C for 12 minutes to obtain an unvulcanized rubber composition.

The unvulcanized rubber composition was formed into a tread shape and assembled with other tire components on a tire building machine. The assembly was press-vulcanized at 170°C for 20 minutes to prepare a test tire (tire size: 11×7.10-5) .

The test tires prepared as above were evaluated as described below. Comparative Example 1 was used as a standard for comparison of Examples 1 to 11 and Comparative Examples 1 to 5. Comparative Example 6 was used as a standard for comparison between Comparative Examples 6 and 7.

(Abrasion resistance)

The abrasion loss of samples taken from the tread of each test tire was measured with a Lambourn abrasion tester at room temperature, an applied load of 1.0 kgf, and a slip ratio of 30%. The measurements are expressed as an index using the equation below. A higher index indicates better abrasion resistance.

$$\text{(Abrasion resistance index)} = \text{(Abrasion loss of standard comparative example)}/\text{(abrasion loss of each formulation example)} \times 100$$

(Wet grip performance)

The viscoelastic parameter of samples taken from the tread of each test tire was measured with a viscoelastometer (ARES, available from Rheometric Scientific) in torsional mode. The tan δ was determined at 0°C, a frequency of 10 Hz, and a strain of 1%. The tan δ values are expressed as an index using the equation below, with the standard comparative example set equal to 100. A higher index indicates better wet grip performance.

$$\text{(Wet grip index)} = (\tan\delta \text{ of standard comparative example})/(\tan\delta \text{ of each formulation example}) \times 100$$

(Rolling resistance)

The loss tangent (tan δ) at 60°C of samples taken from the tread of each test tire was measured with a viscoelastic spectrometer (available from Ueshima Seisakusho Co., Ltd.) at an initial strain of 10%, a dynamic strain of 2%, and a frequency of 10 Hz. The tan δ values are expressed as an index using the equation below, with the standard comparative example set equal to 100. A higher index indicates better fuel economy.

$$\text{(Rolling resistance index)} = (\tan\delta \text{ of standard comparative example})/(\tan\delta \text{ of each formulation example}) \times 100$$

[Table 1]

| | | Comparative Example | | | | Example | | | | | | | | | | |
|---|---|---|---|---|---|---|---|---|---|---|---|---|---|---|---|---|
| | | 1 | 2 | 3 | 4 | 1 | 2 | 3 | 4 | 5 | 6 | 7 | 8 | 9 | 10 | 11 |
| Amount (parts by mass) | SBR1 | 55 | 55 | | 55 | 55 | 55 | 40 | 55 | 55 | 55 | 55 | | | 80 | 45 |
| | SBR2 | 30 | 30 | | 30 | 30 | | | 30 | 30 | 30 | 30 | 46 | 80 | | 30 |
| | SBR3 | | | 100 | | | 30 | 45 | | | | | 49 | 10 | | 10 |
| | BR | 15 | 15 | | 15 | 15 | 15 | 15 | 15 | 15 | 15 | 15 | 5 | 10 | 20 | 15 |
| | Carbon black 1 | 5 | 5 | | | | | | | | | | | | | |
| | Carbon black 2 | | | 5 | 5 | 5 | 5 | 5 | 5 | 5 | 5 | 5 | 5 | 5 | 5 | 5 |
| | Silica 1 | 60 | 60 | 80 | | 60 | 60 | 60 | | 60 | 60 | 60 | 70 | 62.5 | 50 | 60 |
| | Silica 2 | | | | | | | | 60 | | | | | | | |
| | Silica 3 | | | | 60 | | | | | | | | | | | |
| | Aluminum hydroxide | | 15 | | | | | | | | | | | | | |
| | Silane coupling agent 1 | 5.0 | 5.0 | | | | | | | | | | | | | |
| | Silane coupling agent 2 | | | 6.5 | 6.5 | 6.5 | 6.5 | 6.5 | 6.5 | | | | 6.5 | 6.5 | 6.5 | 6.5 |
| | Silane coupling agent 3 | | | | | | | | | 6.5 | | | | | | |
| | Silane coupling agent 4 | | | | | | | | | | 6.5 | | | | | |
| | Silane coupling agent 5 | | | | | | | | | | | 6.5 | | | | |
| | Oil | 12 | 12 | 25 | 12 | 12 | 12 | 12 | 12 | 12 | 12 | 12 | 20 | 15 | 2 | 12 |
| | Resin | 10 | 10 | 10 | 10 | 10 | 10 | 10 | 10 | 10 | 10 | 10 | 10 | 10 | 10 | 10 |
| | Processing aid 1 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Processing aid 2 | 1.0 | 1.0 | | | | | | | | | | | | | |
| | Wax | 2.00 | 2.00 | 1.75 | 1.75 | 1.75 | 1.75 | 1.75 | 1.75 | 1.75 | 1.75 | 1.75 | 1.75 | 1.75 | 1.75 | 1.75 |
| | Antioxidant 1 | 2.0 | 2.0 | 2.2 | 2.2 | 2.2 | 2.2 | 2.2 | 2.2 | 2.2 | 2.2 | 2.2 | 2.2 | 2.2 | 2.2 | 2.2 |
| | Antioxidant 2 | 1.00 | 1.00 | 0.87 | 0.87 | 0.87 | 0.87 | 0.87 | 0.87 | 0.87 | 0.87 | 0.87 | 0.87 | 0.87 | 0.87 | 0.87 |
| | Stearic acid | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Zinc oxide | 2.0 | 2.0 | 2.2 | 2.2 | 2.2 | 2.2 | 2.2 | 2.2 | 2.2 | 2.2 | 2.2 | 2.2 | 2.2 | 2.2 | 2.2 |
| | Sulfur | 1.5 | 1.5 | 1.0 | 1.0 | 1.0 | 1.0 | 1.0 | 1.0 | 1.0 | 1.0 | 1.0 | 1.0 | 1.0 | 1.0 | 1.0 |
| | Vulcanization accelerator 1 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 2 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| A (total mass of silica) | | 60 | 60 | 80 | 60 | 60 | 60 | 60 | 60 | 60 | 60 | 60 | 70 | 62.5 | 50 | 60 |
| B (total styrene content) | | 24.25 | 24.25 | 40.00 | 24.25 | 24.25 | 25.75 | 28.00 | 24.25 | 24.25 | 24.25 | 24.25 | 35.70 | 32.00 | 20.00 | 25.75 |
| A×B | | 1455.0 | 1455.0 | 3200.0 | 1455.0 | 1455.0 | 1545.0 | 1680.0 | 1455.0 | 1455.0 | 1455.0 | 1455.0 | 2499.0 | 2000.0 | 1000.0 | 1545.0 |
| Evaluation | Abrasion resistance | 100 | 85 | 95 | 95 | 110 | 115 | 120 | 120 | 112 | 115 | 113 | 110 | 111 | 110 | 112 |
| | Wet grip performance | 100 | 110 | 110 | 103 | 110 | 110 | 112 | 115 | 111 | 112 | 111 | 115 | 110 | 102 | 112 |
| | Rolling resistance | 100 | 100 | 80 | 100 | 100 | 100 | 99 | 99 | 99 | 99 | 99 | 97 | 99 | 115 | 99 |

[Table 2]

| | | Comparative Example | Example | Comparative Example | |
|---|---|---|---|---|---|
| | | 5 | 2 | 6 | 7 |
| Amount (parts by mass) | SBR1 | 55 | 55 | | |
| | SBR2 | | | | |
| | SBR3 | 30 | 30 | | |
| | BR | 15 | 15 | 100 | 100 |
| | Carbon black 1 | | | | |
| | Carbon black 2 | 5 | 5 | 5 | 5 |
| | Silica 1 | 60 | 60 | 60 | 60 |
| | Silica 2 | | | | |
| | Silica 3 | | | | |
| | Aluminum hydroxide | | | | |
| | Silane coupling agent 1 | 6.5 | | 6.5 | |
| | Silane coupling agent 2 | | 6.5 | | 6.5 |
| | Silane coupling agent 3 | | | | |
| | Silane coupling agent 4 | | | | |
| | Silane coupling agent 5 | | | | |
| | Oil | 12 | 12 | 1 | 1 |
| | Resin | 10 | 10 | 10 | 10 |
| | Processing aid 1 | 2.5 | 2.5 | 2.5 | 2.5 |
| | Processing aid 2 | | | | |
| | Wax | 1.75 | 1.75 | 1.75 | 1.75 |
| | Antioxidant 1 | 2.2 | 2.2 | 2.2 | 2.2 |
| | Antioxidant 2 | 0.87 | 0.87 | 0.87 | 0.87 |
| | Stearic acid | 2.0 | 2.0 | 2.0 | 2.0 |
| | Zinc oxide | 2.2 | 2.2 | 2.2 | 2.2 |
| | Sulfur | 1.0 | 1.0 | 1.0 | 1.0 |
| | Vulcanization accelerator 1 | 1.5 | 1.5 | 1.5 | 1.5 |
| | Vulcanization accelerator 2 | 2.0 | 2.0 | 2.0 | 2.0 |
| A (total mass of silica) | | 60 | 60 | 60 | 60 |
| B (total styrene content) | | 25.75 | 25.75 | 0.00 | 0.00 |
| A×B | | 1545.0 | 1545.0 | 0.0 | 0.0 |
| Evaluation | Abrasion resistance | 104 | 115 | 100 | 105 |
| | Wet grip performance | 101 | 110 | 100 | 100 |
| | Rolling resistance | 100 | 100 | 100 | 100 |

Table 1 shows that with a formulation containing SBR, a fine particle silica having a particle size of 18 nm or less, and a silane coupling agent of formula (I) and satisfying $A \times B \leq 3000$ (wherein A = total mass of silica, B = total mass of styrene), wet grip performance as well as the balance of wet grip performance, abrasion resistance, and fuel economy were significantly improved as compared to formulations not including the silane coupling agent, such as Comparative Examples 1 and 2.

Table 2 demonstrates that wet grip performance as well as the balance of the properties were significantly improved and the properties were synergistically improved when the silane coupling agent of formula (I) was used in an SBR compound containing the fine particle silica as compared to when it was used in a BR compound containing the same.

## Claims

1. A rubber composition for treads, comprising:

   a rubber component comprising a styrene butadiene rubber;
   a fine particle silica having an average particle size of 18 nm or less;
   a silane coupling agent containing an alkoxysilyl group and a sulfur atom wherein a number of carbon atoms linking the alkoxysilyl group to the sulfur atom is six or more; and
   a solid resin that is solid at 25°C,
   the rubber composition satisfying $A \times B \leq 3000$ wherein A and B represent total masses of silica and styrene, respectively, expressed in parts by mass per 100 parts by mass of the rubber component,
   the amount of the solid resin per 100 parts by mass of the rubber component being 3 parts by mass or more,
   wherein the average particle size of the fine particle silica is determined by measuring the sizes of 400 or more primary particles of the silica using a transmission or scanning electron microscope, and averaging them.

2. The rubber composition for treads according to claim 1,

   wherein the A and the B satisfies $1500 \leq A \times B$, and
   the amount of the fine particle silica per 100 parts by mass of the rubber component is 80 parts by mass or less.

3. The rubber composition for treads according to claim 1 or 2,

   wherein the A and the B satisfies $1500 \leq A \times B$, and
   the B is 20 parts by mass or more per 100 parts by mass of the rubber component.

4. The rubber composition for treads according to claim 1 or 2,
   wherein B is 10 to 35 parts by mass per 100 parts by mass of the rubber component.

5. The rubber composition for treads according to any one of claims 1 to 4,
   wherein the rubber composition comprises, per 100 parts by mass of the rubber component, 40 parts by mass or more of a silica having a nitrogen adsorption specific surface area of 150 $m^2/g$ or more.

6. The rubber composition for treads according to any one of claims 1 to 5,
   wherein the number of linking carbon atoms is 8 or more.

7. The rubber composition for treads according to any one of claims 1 to 6,
   wherein the rubber composition satisfies $1000 \leq A \times B$ wherein A and B are as defined above.

8. A pneumatic tire, comprising a tread formed from the rubber composition according to any one of claims 1 to 7.

## Patentansprüche

1. Kautschukzusammensetzung für Laufstreifen, welcher umfasst:

   eine Kautschukkomponente, die einen Styrol-Butadien-Kautschuk umfasst;
   ein feinteiliges Siliciumdioxid, das eine mittlere Partikelgröße von 18 nm oder weniger aufweist;
   ein Silan-Kopplungsmittel, das eine Alkoxysilyl-Gruppe und ein Schwefelatom enthält, wobei eine Anzahl an Kohlenstoffatomen, welche die Alkoxysilyl-Gruppe mit dem Schwefelatom verknüpfen, sechs oder mehr beträgt; und
   ein festes Harz, das bei 25°C fest ist,
   wobei die Kautschukzusammensetzung $A \times B \leq 3000$ erfüllt, wobei A und B jeweils die Gesamtmassen an Siliciumdioxid und Styrol darstellen, ausgedrückt in Massenteilen pro 100 Massenteile der Kautschukkomponente,
   wobei die Menge des festen Harzes pro 100 Massenteile der Kautschukkomponente 3 Massenteile oder mehr beträgt,
   wobei die mittlere Partikelgröße des feinteiligen Siliciumdioxids durch Messen der Größen von 400 oder mehr Primärpartikeln des Siliciumdioxids unter Verwendung eines Transmissions- oder Rasterelektronenmikroskops

und Mitteln derselben bestimmt ist.

2. Kautschukzusammensetzung für Laufstreifen nach Anspruch 1,

   wobei A und B 1500 ≤ A x B erfüllen, und
   die Menge des feinteiligen Siliciumdioxids pro 100 Massenteile der Kautschukkomponente 80 Massenteile oder weniger beträgt.

3. Kautschukzusammensetzung für Laufstreifen nach Anspruch 1 oder 2,

   wobei A und B 1500 ≤ A x B erfüllen, und
   B 20 Massenteile oder mehr pro 100 Massenteile der Kautschukkomponente beträgt.

4. Kautschukzusammensetzung für Laufstreifen nach Anspruch 1 oder 2, wobei B 10 bis 35 Massenteile pro 100 Massenteile der Kautschukkomponente beträgt.

5. Kautschukzusammensetzung für Laufstreifen nach einem der Ansprüche 1 bis 4, wobei die Kautschukzusammensetzung pro 100 Massenteile der Kautschukkomponente 40 Massenteile oder mehr eines Siliciumdioxids umfasst, das eine spezifische Stickstoffadsorptionsoberfläche von 150 $m^2/g$ oder mehr aufweist.

6. Kautschukzusammensetzung für Laufstreifen nach einem der Ansprüche 1 bis 5, wobei die Anzahl an verknüpfenden Kohlenstoffatomen 8 oder mehr beträgt.

7. Kautschukzusammensetzung für Laufstreifen nach einem der Ansprüche 1 bis 6, wobei die Kautschukzusammensetzung 1000 ≤ A x B erfüllt, wobei A und B wie oben definiert sind.

8. Luftreifen, welcher einen Laufstreifen umfasst, der mit der Kautschukzusammensetzung nach einem der Ansprüche 1 bis 7 gebildet ist.

## Revendications

1. Composition de caoutchouc pour bandes de roulement, comprenant :

   un composant de caoutchouc comprenant un caoutchouc styrène butadiène ; une silice particulaire fine ayant une taille particulaire moyenne de 18 nm ou moins ;
   un agent de couplage silane contenant un groupement alcoxysilyle et un atome de soufre, où un nombre d'atomes de carbone reliant le groupement alcoxysilyle à l'atome de soufre est six ou plus ; et
   une résine solide qui est solide à 25 °C,
   la composition de caoutchouc satisfaisant à $A \times B \leq 3000$, où A et B représentent les masses totales de silice et de styrène, respectivement, exprimées en parties en masse pour 100 parties en masse du composant de caoutchouc,
   la quantité de résine solide pour 100 parties en masse du composant de caoutchouc étant de 3 parties en masse ou plus,
   dans laquelle la taille particulaire moyenne de la silice particulaire fine est déterminée en mesurant les tailles de 400 ou plus particules primaires de silice en utilisant un microscope électronique en transmission ou en balayage, et en les moyennant.

2. Composition de caoutchouc pour bandes de roulement selon la revendication 1, dans laquelle A et B satisfont la relation $1500 \leq A \times B$, et la quantité de silice particulaire fine pour 100 parties en masse du composant de caoutchouc est de 80 parties en masse ou moins.

3. Composition de caoutchouc pour bandes de roulement selon la revendication 1 ou la revendication 2, dans laquelle A et B satisfont la relation $1500 \leq A \times B$, et B est égal à 20 parties en masse ou plus pour 100 parties en masse du composant de caoutchouc.

4. Composition de caoutchouc pour bandes de roulement selon la revendication 1 ou la revendication 2,

dans B est égal à 10 à 35 parties en masse pour 100 parties en masse du composant de caoutchouc.

**5.** Composition de caoutchouc pour bandes de roulement selon l'une quelconque des revendications 1 à 4, ladite composition de caoutchouc comprenant, pour 100 parties en masse du composant de caoutchouc, 40 parties en masse ou plus d'une silice ayant une surface spécifique par absorption d'azote de 150 $m^2/g$ ou plus.

**6.** Composition de caoutchouc pour bandes de roulement selon l'une quelconque des revendications 1 à 5, dans laquelle le nombre d'atomes de carbone de liaison est de 8 ou plus.

**7.** Composition de caoutchouc pour bandes de roulement selon l'une quelconque des revendications 1 à 6, ladite composition composition de caoutchouc satisfaisant la relation $1000 \leq A \times B$, où A et B sont tels que définis ci-dessus.

**8.** Pneumatique, comprenant une bande de roulement formée à partir de la composition de caoutchouc selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4266248 B
- US 20080173379 A1
- JP 2009126907 A
- JP 2010111753 A